**Europäisches Patentamt**

**European Patent Office**

**Office européen des brevets**

(19)

(11) Numéro de publication: **0119911**
**B1**

(12) # FASCICULE DE BREVET EUROPEEN

(45) Date de publication du fascicule du brevet:
**01.06.88**

(21) Numéro de dépôt: **84400476.2**

(22) Date de dépôt: **09.03.84**

(51) Int. Cl.⁴: **G 01 S 7/52**, G 01 S 7/62,
**G 10 K 11/34**

(54) **Procédé d'imagerie par ultrasons à partir d'un alignement d'éléments transducteurs.**

(30) Priorité: **18.03.83 FR 8304486**

(43) Date de publication de la demande:
**26.09.84 Bulletin 84/39**

(45) Mention de la délivrance du brevet:
**01.06.88 Bulletin 88/22**

(84) Etats contractants désignés:
**DE GB NL**

(56) Documents cités:
**EP - A - 0 031 510**
**FR - A - 2 328 205**
**FR - A - 2 472 753**
**FR - A - 2 507 078**
**FR - A - 2 508 665**
**US - A - 4 252 026**
**US - A - 4 254 662**

**ULTRASONICS, vol. 18, no. 1, janvier 1980, pages 38-42, IPC Business Press, Guildford, GB D. ASSENZA et al.:"Echographic imaging with dynamically focused insonification"**

(73) Titulaire: **CGR ULTRASONIC, 9, Chaussée de Paris, F-77102 Villenoy-les-Meaux (FR)**

(72) Inventeur: **Bele, Robert, THOMSON-CSF SCPI 173, bld Haussmann, F-75379 Paris Cedex 08 (FR)**
Inventeur: **Micaletti, Gilbert, THOMSON-CSF SCPI 173, bld Haussmann, F-75379 Paris Cedex 08 (FR)**

(74) Mandataire: **Grynwald, Albert et al, THOMSON-CSF SCPI 19, avenue de Messine, F-75008 Paris (FR)**

ACTORUM AG

## Description

L'invention concerne un procédé d'imagerie par ultrasons à partir d'un alignement d'éléments transducteurs; elle se rapporte plus particulièrement au séquencement des tirs de faisceaux d'ultrasons pour obtenir le meilleur compromis possible entre la qualité de l'image et la rapidité avec laquelle elle est acquise.

Il est connu de former une image d'une structure, suivant une coupe choisie de celle-ci, en générant une succession de faisceaux d'ultrasons à partir d'une barrette émettrice subdivisée en une pluralité d'éléments transducteurs, piézo-électriques, disposés côte à côte et en captant et traitant les échos renvoyés par la structure vers les mêmes éléments, lesquels sont donc utilisés séquentiellement en émission et réception. Le séquencement consiste à générer des faisceaux d'ultrasons de façon à explorer la structure ligne par ligne et à utiliser les échos reçus où une partie de ceux-ci en tant que signaux vidéo d'un ecran de télévision. Pour obtenir une résolution latérale convenable (résolution dans le sens parallèle à la barrette), il faut que chaque faisceau émis ait une section aussi faible que possible et que cette section soit aussi constante que possible sur toute la profondeur d'exploration. Ceci est une prémiere difficulté qui a été partiellement résolue en engendrant chaque faisceau par excitation, chaque fois, d'un groupe d'éléments adjacents avec une loi de retards prédéterminée, les deux éléments extrêmes étant d'abord excités puis les deux éléments voisins et ainsi de suite jusqu'aux éléments centraux du groupe. La loi des retards choisie permet d'obtenir un faisceau suffisamment étroit sur une certaine partie de sa longueur pour donner lieu à une bonne définition latérale au moins sur une partie de la profondeur d'exploration souhaitée. Il est aussi connu de faire varier la configuration focale du faisceau à l'émission pour une direction de tir donnée. Ceci est mis à profit en décomposant le plan de coupe en plusieurs bandes parallèles ou zones focales et en faisant correspondre à l'émission des faisceaux d'ultrasons ayant des caractéristique focales respectives optimales pour ces zones. Ainsi, si on partage la coupe à imager en quatre zones focales, il faudra générer pour chaque ligne quatre faisceaux à caractéristiques focales différentes pour reconstituer une ligne de l'image finale à partir des échos correspondant aux portions «utiles» de sections étroites des quatre faisceaux ayant été émis suivant la direction de la ligne. On comprend que dans ces conditions, le temps d'acquisition de l'image soit multiplié par le nombre de zones focales choisi. Ce temps dépend de la vitesse de propagation des ondes ultrasonores dans la structure, puisqu'on est obligé d'attendre le temps nécessaire à la réception des échos entre deux tirs consécutifs. Pour augmenter la cadence des images, il à été proposé dans la demande de brevet européen EP-A 0 031 510 d'émettre non plus à période constante mais immédiatemment après acquisition des échos provenant de la zone focale précédemment explorée. Ce processus présente l'inconvénient d'une diaphonie de récurrence importante lors des tirs successifs de faisceaux car les échos correspondant à un tir donné sont encore très significatifs au moment de l'acqisition des échos du tir suivant et viennent se superposert à ceux-ci. Dans la pratique, on est donc obligé d'attendre un intervalle de temps supplémentaire entre les tirs. Ceci diminue la candence des images par rapport à ce qui pouvait être espéré d'un tel processus de formation d'images.

Par ailleurs, on a cherché à réduire les problèmes de diaphonie de récurrence en procédant à l'acquisition de l'image par des tirs d'ultrasons espacés les uns des autres dans la coupre, par exemple en sélectionnant deux groupes de transducteurs pour générer deux faisceaux séparés par environ la moitié de la longueur de la barrette et en acquérant les échos utiles à partir de tirs focalisés effectués à partir des deux groupes. Un tel processus est explicité par exemple dans la demande de brevet français N° 8 112 843 (FR-A 2 508 665) déposée au nom de la demanderesse. Dans une autre demande de brevet français n° 7 932 087 (FR-A 2 472 753) il est également proposé un dispositif semblable de sondage par ultrasons. De même dans un article intitulé «Echographic Emerging with dynamically focused insonification», ULTRASONICS, Vol 18, n° 1, Janvier 80, pp 38–42, on prévoit de modifier latéralement, d'un tir à l'autre, les différentes régions d'une coupe à imager.

L'invention propose, entre autres, une combinaison avantageuse des solutions antérieures exposées ci-dessus, ainsi qu'une particularité de séquencement permettant en outre de simplifier le logiciel de commande et les moyens de commutation nécessaires pour exciter convenablement les différents éléments transducteurs, tout en minimisant les pertes de temps imputables aux commutations entre les deux groupes d'éléments sélectionnés.

Dans cet esprit, l'invention concerne donc un procédé d'imagerie par séquences de tirs d'ultrasons et réceptions d'échos correspondants, à partir d'un alignement d'éléments tranducteurs couplés à un objet à imager, du type consistant, pour l'émission, à générer des séquences prédéterminées de faisceaux focalisés à partir, chaque fois, de deux groupes d'éléments transducteurs sélectionnés respectivement dans deux sections dudit alignement, lesdits groupes différant d'au moins un élément à chaque séquence de façon à réaliser un balayage de tels faisceaux et chaque séquence comprenant un nombre et un enchaînement prédéterminés d'émissions de faisceaux à partir de nombres prédéterminés d'éléments desdits deux groupes sélectionnés, lesquels faisceaux sont conformés suivant N configurations focales possibles associées respectivement à N régions ou zones focales parallèles audit alignement, N étant un nombre entier choisi, caractérisé en ce qu'on génère les faisceaux alternativement d'un groupe à l'autre sauf lorsqu'un fais-

ceau donné correspond à la zone focale la plus éloignée dudit alignement, auquel cas le tir suivant est effectué sans changer de groupe (G, G').

Ainsi, lorsqu'on a procédé à l'acquisition des données utiles pour ladite zone focale la plus éloignée, on peut émettre le faisceau suivant à partir du même groupe. De préférence, on fait suivre chaque émission correspondant à ladite zone focale la plus éloignée par une émission de sensiblement même direction mais avec une configuration focale correspondant à la zone focale adjacente à ladite zone focale la plus éloignée.

Une autre donnée importante du problème est le nombre de lignes constituant l'image. Il est évident que pour améliorer la netteté de l'image il faut augmenter le nombre de lignes. Une première solution consiste, pour une barrette de longueur donnée, à augmenter le nombre d'éléments transducteurs piézo-électriques. Etant donné que ces éléments sont obtenus en découpant la céramique à l'aide d'une scie fine, il va de soi que la réduction de largeur des éléments piézo-électriques se heurte à des limites technologiques. Pour augmenter le nombre des lignes, on a proposé d'émettre les faisceaux non pas suivant une direction perpendiculaire à l'alignement de transducteurs mais dans des directions inclinées dans le plan de coupe et symétriques par rapport à cette direction normale. Ce processus est par exemple décrit dans le brevet américain US-A 4 070 905. Ainsi, un même groupe d'éléments permet d'obtenir plusieurs lignes voisines de l'image. L'invention concerne aussi l'incorporation d'une technique dite de «microangulation» dans le processus de séquencement des tirs en ce sens que, pour chaque groupe d'éléments choisi à chaque séquence, on émet au cours de ladite séquence, suivant l'une ou l'autre de deux directions possibles sensiblement symétriques par rapport à une direction normale audit alignement et faisant avec celle-ci un angle faible. Ce processus de microangulation s'est révélé avantageux à combiner avec le mode de focalisation des faisceaux puisque la microangulation se fait par les mêmes moyens que la focalisation, c'est à dire en adaptant en conséquence la loi des retards entre les éléments d'un groupe sélectionné. D'autre part, la technique de microangulation est améliorée par le fait que l'angle d'émission est d'autant plus faible que la zone focale correspondante est éloignée de l'alignement de transducteurs.

L'invention sera mieux comprise et d'autres avantages de celle-ci apparaîtront mieux à la lumière de la description qui va suivre de plusieurs processus de séquencement de tirs, selon l'invention dans un système d'imagerie utilisant une sonde à barrette, donnée uniquement à titre d'exemple et faite en référence aux dessins annexés, dans lesquels:

la fig. 1 est un schéma d'une sonde à barrette placée devant une structure pour élaborer une image suivant une coupe de celle-ci partagée en quatre zones focales;

la fig. 2a est un graphe illustrant une loi de retards propre à générer un faisceau d'une configuration focale prédéterminée;

la fig. 2b est un graphe illustrant la loi des retards pour générer un faisceau sensiblement identique au précédent, avec microangulation;

la fig. 3 est un schéma illustrant un mode de séquencement préféré dans le cas d'une coupe partagée en quatre zones focales;

la fig. 4 est un schéma illustrant un mode de séquencement préféré dans le cas d'une coupe partagée en trois zones focales;

la fig. 5 est un schéma illustrant un mode de séquencement préféré dans le cas d'une coupe partagée en deux zones focales;

la fig. 6 est un schéma bloc partiel d'une unité de traitement électronique permettant de reconstituer une image avec un séquencement des tirs selon l'invention.

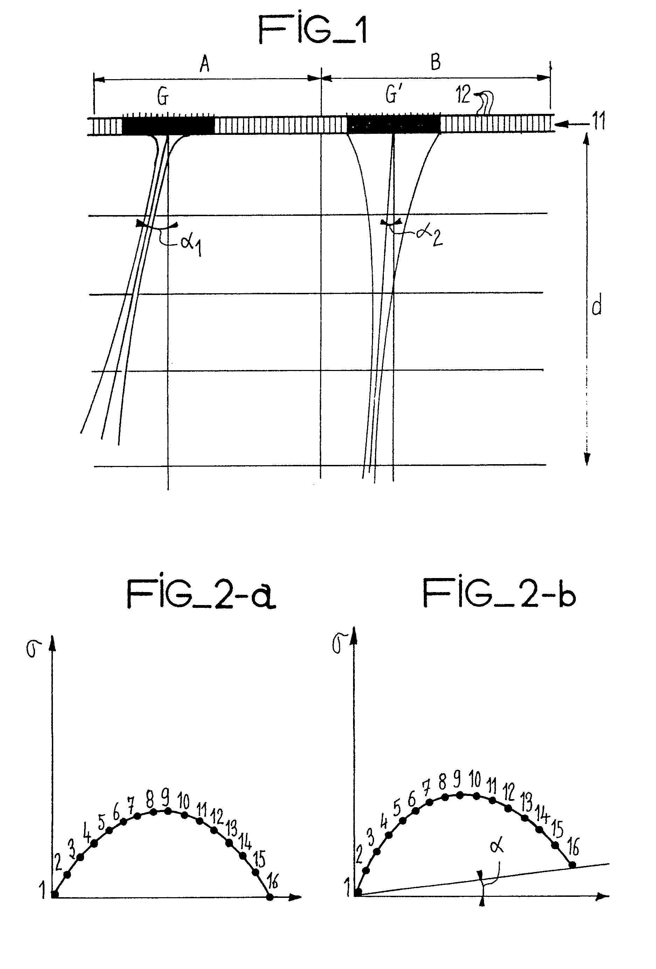

La fig. 1 représente une sonde d'échographie formée essentiellement d'un alignement 11 d'éléments tranducteurs 12 piézo-électriques. Cette sonde est placée devant la structure dont on désire observer une coupe et on a représenté dans deux moitiés de cette coupe l'allure générale des faisceaux d'ultrasons qui peuvent être émis à partir de la barrette avec des configurations focales différentes. On remarque que ces faisceaux n'ont la finesse voulue que sur une partie de leur longueur, notablement inférieure à la profondeur d de l'image désirée. C'est la raison pour laquelle on a partagé la coupe à imager en N régions (N = 4, dans l'exemple) I, II, III et IV sous forme de bandes parallèles à l'alignement 11 et de plus en plus éloignées, dans cet ordre, de celui-ci. Ces régions seront appelées zones focales dans la suite du texte et lesdits zones focales seront toujours numérotées dans un ordre croissant à partir de la barrette. Comme on sait donner au faisceau une configuration focale voulue, on associe N configurations focales aux N zones focales, respectivement, de façon que dans la mesure du possible, la portion utile de faible section du faisceau soit située dans la zone focale correspondante. Ainsi, sur la fig. 1, le faisceau d'ultrasons de gauche en regardant le dessin, est le faisceau dont la configuration focale a été choisie pour la première zone focale I, tandis que le faisceau de droite est celui dont la configuration focale a été choisie pour la quatrième zone focale IV. La façon de générer de tels faisceaux est connue. Il faut exciter non pas un, mais un groupe d'éléments 12 adjacents avec des retards prédéterminés entre les éléments.

Ainsi, la fig. 2a montre la loi des retards entre les éléments d'un groupe de seize (le retard $\tau$ étant porté en ordonnée) pour générer un faisceau perpendiculaire à l'alignement 11. On commence par exciter simultanément les éléments extrêmes 1, 16 du groupe puis les deux éléments voisins 2, 15 puis les deux éléments suivant 3, 14 et ainsi de suite jusqu'aux deux éléments 8, 9 du centre du groupe. Par ailleurs, le nombre d'éléments à exciter dans un groupe pour obtenir une configuration focale donnée est différent suivant

3

la profondeur de focalisation voulue, c'est à dire suivant la zone focale concernée. En règle générale, dans chaque groupe on génère un faisceau correspondant à une zone focale éloignée de l'alignement 11 à partir d'un plus grand nombre d'éléments transducteurs (et d'une loi de retards associée) que lorsqu'on génère un faisceau correspondant à une zone focale proche de ce même alignement. Dans cet esprit, le nombre d'éléments d'un groupe au sens de la description est le nombre d'éléments nécessaire pour générer un faisceau associé à la zone focale la plus éloignée. Ainsi, so l'on se reporte à la fig. 1, on a souligné en noir deux groupes de seize éléments G et G' sélectionnés (pour une séquence donnée de fonctionnement qui sera explicitée plus loin) dans deux sections A, B respectives de l'alignement 12 représentant chacune une moitié de la barrette. Le groupe G est utilisé selon l'exemple pour générer un faisceau correspondant à une zone focale I et dans ce cas, seuls les huit éléments centraux sont réellement excités avec des retards appropriés. En revanche, le groupe G' est utilisé, selon l'exemple, pour générer un faisceau correspondant à une zone focale IV et dans ce cas les seize éléments du groupe sont effectivement excités avec une autre loi de retards adaptée. Ainsi, dans l'exemple précis de la fig. 1, un groupe sélectionné G ou G' est toujours constitué de seize éléments et comme N = 4 (nombre de zones focales) on associe quatre configurations focales de faisceau respectives à ces quatre zones et on utilise seize éléments pour générer le faisceau associé à la quatrième zone focale, douze éléments pour générer le faisceau associé à la troisième zone focale, et huit éléments pour générer les faisceaux respectivement associés aux première et seconde zones focales. Les éléments non utilisés pour une configuration focale particulière sont ceux des extrémités du groupe pour que les éléments utiles forment toujours un ensemble d'éléments adjacents.

En outre, dans le but de doubler la densité de lignes pour le même nombre d'éléments transducteurs, on a choisi d'effectuer des tirs d'ultrasons suivant deux directions possibles à partir de chaque groupe d'éléments G, G' sélectionnées pour une séquence déterminée. Plus précisément, les deux directions possibles sont sensiblement symétriques par rapport à la normale à la barrette et définissent une angle faible ($\pm\alpha_1$ ou $\pm\alpha_2$) par rapport à celle-ci. l'angle $\alpha$ est suffisamment faible (il a été volontairement accentué sur la fig. 1) pour qu'à l'affichage des échos correspondants on puisse accepter que ces échos soient imagés suivant deux lignes adjacentes du récepteur de télévision sur lequel on reconstitue l'image. Cette microangulation peut être obtenue par simple modification de la loi des retards définissant la configuration focale.

La fig. 2b illustre la transformation de la loi des retards de la fig. 2a pour obtenir un faisceau de sensiblement même configuration focale mais émis avec un angle faible $\alpha$ par rapport à une direction normale à l'alignement 11. On comprend donc que la microangulation des faisceaux se réalise technologiquement à partir des mêmes moyens que ceux qui déterminent la configuration focale voulue, à savoir dans la pratique, des lignes à retards règlables.

Chaque fois que deux groupes tels que G et G' ont été sélectionnées on commande une séquence de tirs dont le nombre est égal à quatre fois le nombre de zones focales (ceci en raison de la microangulation précitée) et les échos recueillis de cette séquence permettent de reconstituer quatre lignes de l'image recherchée localisées par paires et situées respectivement en regard des sections A et B de l'alignement 11 au centre des groupes sélectionnés. Toute nouvelle séquence est initialisée par changement d'un élément à chaque fois dans chaque groupe de façon à balayer progressivement toute la barrette. Ainsi, par exemple, pour la séquence qui suivra celle pour laquelle les groupes G et G' sont sélectionnés il suffira de supprimer l'élément le plus à gauche de chaque groupe (en regardant la fig. 1) et d'ajouter un élément à droite chaque groupe pour définir les deux nouveaux groupes concernés pour cette nouvelle séquence, et ainsi de suite jusqu'à ce que les groupes se soient déplacés sur toute la longueur d'une demi-barrette.

Selon une caractéristique importante de l'invention, l'enchaînement des tirs dans une séquence est tel qu'on génère les faisceaux essentiellement alternativement d'un groupe à l'autre sauf lorsqu'un faisceau donné correspond à une zone focale IV. Dans ce cas le tir suivant est alors effectué à partir du même groupe et, selon un mode de séquencement préféré, on fait suivre chaque émission correspondant à la zone focale IV par l'émission d'un faisceau de sensiblement même direction mais avec une configuration focale correspondant à la zone focale III.

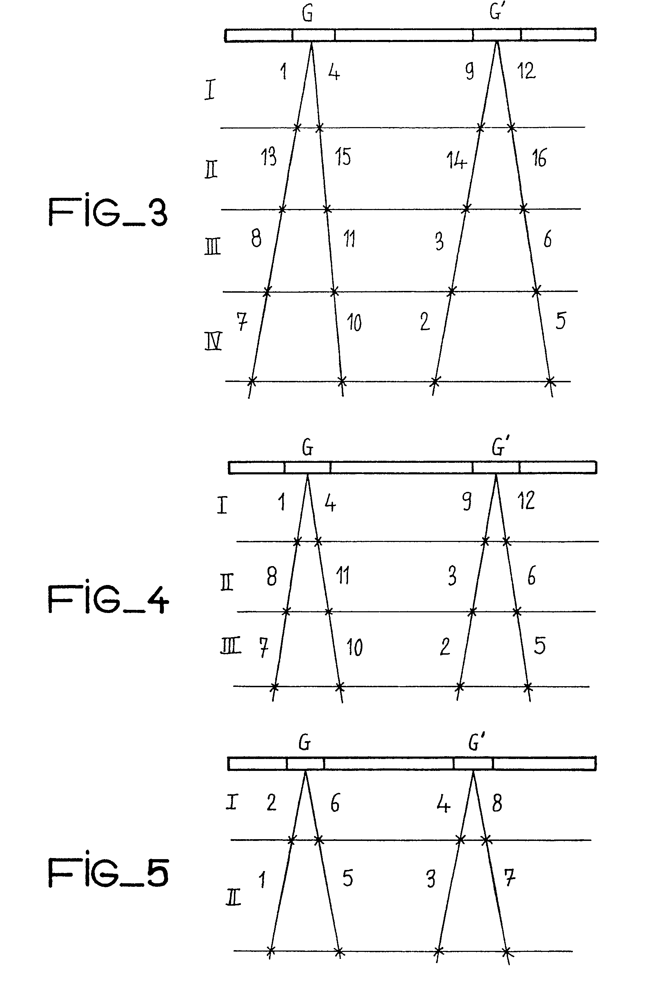

Bien entendu, ce processus est valable avec ou sans microangulation, c'est à dire que la séquence soit prévue pour permettre l'acquisition de deux lignes (tirs perpendiculaires à l'alignement) ou de quatre lignes (tirs $\pm\alpha$ de part et d'autre de la normale). Par exemple, dans le cas d'une reconstruction d'image à quatre zones focales une succession possible des tirs est explicitée à la fig. 3 où l'on a seulement représenté pour plus de clarté la direction des tirs (microangulation $\pm\alpha$) et où l'ordre des tirs est indiqué dans chaque zone focale correspondante en regard du tronçon «utile» du faisceau associé. On peut aussi résumer les caractéristiques de chaque faisceau émis par la lettre G ou G' indicée. Dans ce cas, G ou G' désigne le groupe à partir duquel le faisceau est émis, le premier indice indique le rang de la zone focale à partir dudit alignement et le second indice (a ou b) indique le sens de la microangulation, c'est à dire les faisceaux de sensiblement même orientation dans chaque groupe. Par conséquent, si on attribue l'indice a à une microangulation dirigée vers la gauche de la fig. 3 et l'indice b à une microangulation dirigée vers la droite, la succession des tirs dans une séquence est la suivante:

– $G_{1a}$, $G'_{4a}$, $G'_{3a}$, $G_{1b}$, $G'_{4b}$, $G'_{3b}$, $G_{4a}$, $G_{3a}$, $G'_{1a}$,

$G_{4b}, G_{3b}, G'_{1b}, G_{2a}, G'_{2a}, {}_{2b}, G'_{2b}.$

La fig. 4 schématise de la même façon une stratégie de tirs optimale dans le cas où N = 3 et dans ce cas, chaque séquence comporte les tirs suivants:

– $G_{1a}, G'_{3a}, G'_{2a}, G_{1b}, G'_{3b}, G'_{2b}, G_{3a}, G_{2a}, G'_{1a}, G_{3b}, G_{2b}, G'_{1b}.$

On vérifie que le fait de diminuer le nombre de zones focales perment une acquisition plus rapide de l'image puisque le quatre lignes d'une séquence sont acquises avec seulement douze tirs contre seize précédemment, la contrepartie étant évidemment une moins bonne définition latérale dans certaines régions de l'image, ou une profondeur d'exploration plus faible.

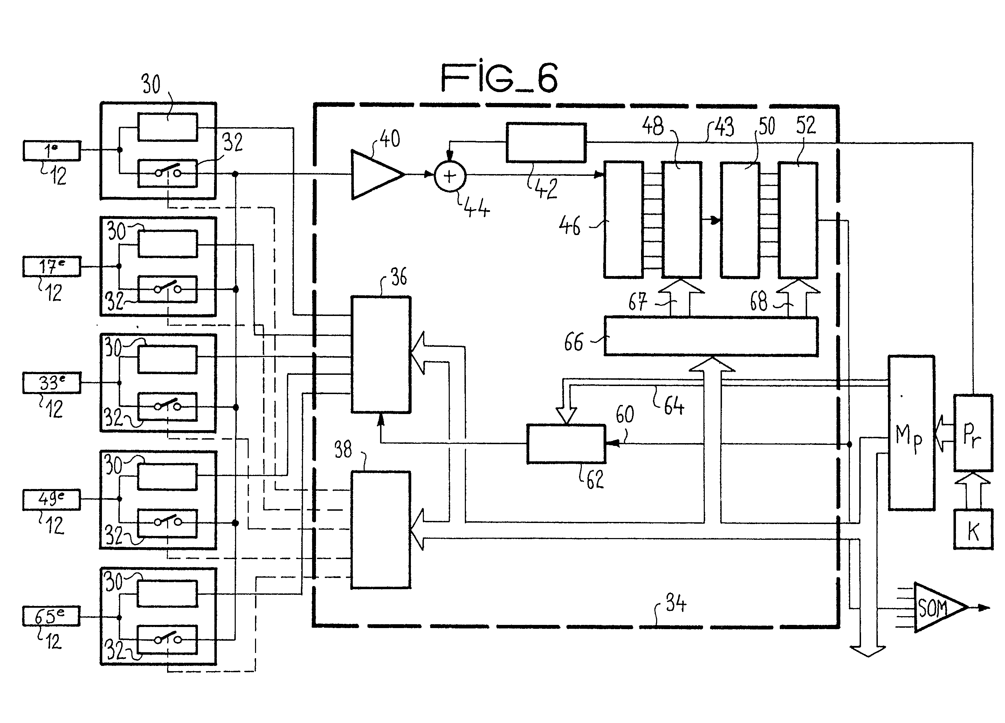

De même, la fig. 5 schématise une stratégie de tirs selon le principe de l'invention dans le cas où N = 2, chaque séquence comporte alors les tirs suivants:

– $G_{2a}, G_{1a}, G'_{2a}, G'_{1a}, G_{2b}, G_{1b}, G'_{2b}, G'_{1b}.$

Cette stratégie de tirs s'est révélée la plus efficace pour permettre une acquisition de l'image aussi rapidement que possible à taux de diaphonie donné. En effet, en plus de la séparation temporelle des tirs, on réalise une séparation spatiale d'environ la moitié de la longueur de la barrette. On déroge néanmoins, selon l'invention, à ce principe général lorsqu'on procède à l'acquisition d'une portion de ligne dans la zone focale la plus éloignée. On peut en effet considérer que les échos crées au-delà de cette dernière zone focale on subit une atténuation telle qu'ils ne peuvent perturber d'autres échos correspondant à des faisceaux générés ultérieurement et focalisés sur d'autre zones focales. C'est la raison pour laquelle, après avoir acquis les échos correspondants à une dernière zone focale suivant une direction donnée, on peut acquérir immédiamment les échos correspondant à la zone focale voisine dans la même direction, donc sans passer d'un groupe d'éléments à l'autre. Ceci perment d'économiser chaque fois (c'est à dire quatre fois par séquence) le temps de commutation d'un groupe à l'autre, seule la loi des retards étant à modifier. Dans ces conditions on peut appliquer avec un taux de diaphonie beaucoup plus faible le principe de récurrence d'émission variable connu notamment de la demande de brevet européen EP-A 0 031 510 où un faisceau donné est émis après un temps inférieur au temps nécessaire pour qu'un échos formé à la limite de la zone focale la plus éloignée puisse revenir au niveau de l'alignement 11 pour être capté. Dans la majorité des cas, on pourra émettre chaque nouveau faisceau au bout de l'intervalle de temps théoriquement le plus court, c'est à dire à la fin du temps nécessaire au retour d'un écho formé à la limite de la zone focale correspondant au faisceau précédent. Pratiquement, ce sera toujours possible sauf si cette zone focale est la plus proche de l'alignement 11 (zone I). Dans ce dernier cas (c'est à dire après les tirs $G_{1a}, G_{1b}, G'_{1a}$ et $G'_{1b}$ pour N = 4), il sera le plus souvent nécessaire pour conserver un faible taux de diaphonie, de retarder d'un intervalle de temps supplémentaire prédéterminé le moment de l'émission du faisceau qui suit l'émission d'un faisceau correspondant à la zone focale la plus proche. Ce temps supplémentaire sera cependant moins important, toutes choses égales par ailleurs, en raison de la séparation spatiale des faisceaux consécutifs générés successivement à partir des deux groupes G et G' sélectionnés. Les temps de retour sont dans tous les cas faciles à déterminer puisqu'ils dépendent de paramètres connus comme la vitesse de propagation des ultrasons dans la structure à imager (fonction de la fréquence des ultrasons choisie) et les limites des différentes zones focales. Il est à noter de ce point de vue que les frontières des différente zones focales peuvent n'être prises en compte en tant que données qu'à la réception, en ne retenant comme significatifs que les signaux reçus entre deux instants correspondant respectivement aux temps de retour des échos formés aux limites de la zone foctale choisie (fenêtrage temporel).

Selon une autre caractéristique de l'invention, la valeur de la microangulation est différente en fonction de la zone focale considérée. Plus précisément, la microangulation est d'autant plus faible que la zone focale correspondante est éloignée de l'alignement 11 ($\alpha1 > \alpha2$, voir fig. 1). En effet, comme on reconstitue l'image à partir d'un balayage de lignes parallèles sur l'écran de visualisation, il est préférable d'adapter chaque fois la microangulation à la distance de la zone focale pour éviter un brouillage de l'image correspondant au chevauchement des informations recueillies, en faisant en sorte que le faisceau d'émission s'éloigne aussi peu que possible de la direction normale à l'alignement dans sa portion «utile». On pourra par exemple., pour chaque zone focale, choisir une valeur de la microangulation telle que deux directions de tir convergentes (de types a et b) à partir de deux groupes voisins décalés seulement d'un élément transducteur, ne se croisent qu'à la limite ou-delà de la zone focale concernée.

La fig. 6 montre l'architecture générale d'un système d'imagerie susceptible de mettre en oeuvre le procédé défini ci-dessus. Chaque élément transducteur 12 est connecté à un émetteur 30, connu en soi, chargé de lui transmettre à chaque excitation, une impulsion de durée correspondant à la demi-période de la fréquence ultrasonore choisie, ainsi qu'à un circuit de réception 32 commandé (commutateur analogique commandé par exemple). Puisque les groupes sélectionnés sont formés de seize éléments, il faut seize circuits de commande 34 susceptibles d'être adressés pour piloter un élément tranducteur avec un retard prédéterminé. Dans ces conditions, pour une barrette de 79 éléments (selon un mode de réalisation actuellement préféré), on peut associer cinq éléments transducteurs à chaque circuit de commande 34. Par exemple, sur la fig. 6, on a regroupé les premier, dix-septième, trente-troisième, quarante-neuvième et soixante-cinquième éléments. Les cinq émetteurs 30 correspondants sont connectés aux sorties d'un démultiplexeur 36 et les cinq entrées de commande des circuits de réception 32 sont connectées aux sorties d'un démultiplexeur 38 (les liaisons de commande des circuits 32 sont figurées en traits interrompus). Les sorties de signal analogique de cinq circuits de réception 32 sont toutes connectées à l'entrée d'un préamplificateur 40. Les démultiplexeurs sont adressés pour exciter un émetteur parmi cinq à chaque tir et pour valider simultanément et uniquement le circuit de réception 32 correspondant. Chaque circuit de commande 34 comporte en outre un moyen de mise forme 42 (trigger par exemple) d'une impulsion de commande, laquelle est transmise par un fil de liaison 43. La sortie du moyen de mise en forme 42 est appliquée à l'entrée d'un sommateur 44 qui reçoit aussi le signal de sortie du préamplificateur 40. La sortie de ce sommateur 44 est reliée à l'entrée d'une première ligne à retards 46 à huit sorties respectivement reliées aux huit entrées d'un premier multiplexeur 48. La sortie de ce dernier est reliée à l'entrée d'une deuxieme ligne à retards 50 à sept sorties respectivement reliées aux sept entrées d'un second multiplexeur 52. Les retards disponibles aux sorties de la ligne 46 vont de 0 à 70 nanosecondes par pas de dix nanosecondes tandis que les retards disponibles aux sorties de la ligne 50 vont de 0 à 480 nanosecondes par pas de 80 nanosecondes. On peut donc obtenir n'importe quel retard compris entre 0 et 550 nanosecondes, avec une précision de 10 nanosecondes, par le simple adressage des multiplexeurs 48 et 52. La sortie du multiplexeur 52 est connectée, d'une part, à une entrée d'un amplificateur sommateur SOM qui a ses autres entrées reliées aux sorties correspondantes des autres circuits 34, et d'autre part, à l'entrée de déclenchement 60 d'un générateur d'impulsion 62 chargé d'élaborer à chaque tir une impulsion d'excitation, retardée d'un intervalle de temps voulu et transmise à l'un des cinq émetteurs 30 via le démultiplexeur 36. La durée de cette impulsion (qui est égale comme indiqué précédemment à une demi-période de la fréquence ultrasonore utilisée) est détermininée par le logiciel de commande (liaison 64). Le générateur 62 se définit donc comme une sorte de monostable à durée programmable. Un générateur d'adresse 66 pilote les deux multiplexeurs 48 et 52 (liaisons d'adressage 67 et 68). Le logiciel de commande est essentiellement constitué d'une mémoire-programme Mp, du type PROM, d'un processeur Pr couplé à la mémoire Mp pour sélectionner dans celle-ci la lecture des instructions correspondant à un séquencement donné résultant de la combinaison des paramètres choisis par l'opérateur, par l'intermédiaire d'un ensemble de pilotage, tel que par exemple un clavier K relié au processeur Pr. La mémoire-programme pilote le générateur d'adresse 66 ainsi que les démultiplexeurs 36 et 38 de chaque circuit 34. Les paramètres affichés par l'opérateur sont notamment: la fréquence des ondes ultrasonores, le nombre de zones focales et leurs limites. En fonction de ces paramètres, le processeur organise la lecture d'un certain nombre d'instructions de la mémoire-programme régissant le cadencement des tirs d'ultrasons, les lois de retards successives, les portions utiles à retenir pour l'affichage, les temps d'attente entre deux tirs, les corrections de gain en fonction de la profondeur de la zone focale pour tenir compte de l'atténuation des échos, les valeurs de microangulation, etc. Pour l'excitation de chaque élément transducteur, le processeur émet un ordre de tir (transmis sur le fil de liaison 43) qui est retardé en fonction du positionnement préalable des multiplexeurs 48 et 52. Cet ordre déclenche le generateur d'impulsions 62, la durée de cette impulsion étant contrôlée par la mémoire-programme (liaison 64). A la réception, les échos transmis par le circuit 32 validé, subissent les mêmes retards (amplificateur 40 relié à l'entrée de la ligne à retards 46) avant d'être additionnés par l'amplificateur SOM réalisant ainsi une focalisation à la réception. Lorsque l'élément d'un groupe doit être inhibé pour la focalisation dans une zone focale proche de la barrette, le générateur d'adresse 66 pilote la mise à la masse de l'étage de sortie du multiplexeur 52, de sorte que le générateur 62 ne soit pas déclenché. Les signaux de sortie de l'amplificateur SOM sont traités, notamment «fenêtrés», avant d'être utilisés en tant que signaux vidéo d'un récepteur de télévision sur lequel l'image est reconstituée ligne par ligne.

**Revendications**

1. Procédé d'imagerie par séquences de tirs d'ultrasons et réception d'échos correspondants, à partir d'un alignement d'éléments transducteurs couplé à un objet à imager, du type consistant, pour l'émission, à générer des séquences prédéterminées de faisceaux focalisés à partir, chaque fois, de deux groupes (G, G') d'éléments transducteurs sélectionnés respectivement dans deux sections (A, B) dudit alignement (11), lesdits groupes différant d'au moins un élément (12) à chaque séquence de façon à réaliser un balayage de tels faisceaux et chaque séquence comprenant un nombre et un enchaînement prédéterminés d'émissions de faisceaux à partir de nombres prédéterminés d'éléments desdits deux groupes sélectionnés, lesquels faisceaux sont conformés suivant N configurations focales possibles associées respectivement à N régions ou zones focales parallèles audit alignement, N étant un nombre entier choisi, caractérisé en ce qu'on génère les faisceaux alternativement d'un groupe à l'autre sauf lorsqu'un faisceau donné correspond à la zone focale la plus éloignée dudit alignement. (IV, pour N = 4), auquel cas le tir suivant est effectué sans changer de groupe (G, G').

2. Procédé selon la revendication 1, caractérisé en ce qu'on fait suivre chaque émission correspondant à ladite zone focale la plus éloignée (IV) par une émission de sensiblement même direction mais avec une configuration focale correspondant à la zone focale adjacente (III) à ladite zone focale la plus éloignée.

3. Procédé selon la revendication 1 ou 2, caractérisé en ce que pour chaque groupe d'éléments choisi à chaque séquence, on émet au cours de ladite séquence sensiblement suivant l'une ou l'autre de deux directions possibles sensiblement symétriques par rapport à une direction normale audit alignement et faisant un angle faible par rapport à celle-ci.

4. Procédé selon l'une des revendications précédentes, caractérisé en ce que, dans une séquence donnée, la récurrence d'émission des faisceaux est variable, au moins un faisceau donné étant émis après un temps inférieur au temps nécessaire à un écho formé à la limite de la zone focale la plus éloignée de revenir au niveau dudit alignement (11).

5. Procédé selon la revendication 4, caractérisé en ce qu'on génère chaque faisceau à la fin du temps nécessaire au retour d'un écho formé à la limite de la zone focale correspondant au faisceau précédent, sauf si cette zone focale est la plus proche (I) dudit alignement.

6. Procédé selon la revendication 5, caractérisé en ce qu'on retarde d'un temps supplémentaire le moment de l'émission du faisceau qui suit l'émission d'un faisceau correspondant à ladite zone focale la plus proche dudit alignement.

7. Procédé selon l'une des revendications 3 à 6, caractérisé en ce que le nombre de zones focales étant égal à quatre et les limites des zones adjacentes étant prédéterminées, on associe à ces quatre zones, quatre configurations focales de faisceau respectives et on élabore chaque séquence à partir des deux groupes d'éléments sélectionnées (G, G') en générant successivement les faisceaux suivants:
– $G_{1a}$, $G'_{4a}$, $G'_{3a}$, $G_{1b}$, $G'_{4b}$, $G'_{3b}$, $G_{4a}$, $G_{3a}$, $G'_{1a}$, $G_{4b}$, $G_{3b}$, $G'_{1b}$, $G_{2a}$, $G'_{2a}$, $G_{2b}$, $G'_{2b}$, la lettre G ou G' indiquant le groupe d'éléments sélectionnés, le premier indice indiquant le rang de la zone focale à partir dudit alignement et le second indice a ou b indiquant les faisceaux de sensiblement même orientation dans chaque groupe.

8. Procédé selon l'une des revendications 3 à 6, caractérisé en ce que le nombre N de zones focales étant égal à trois et les limites des zones adjacentes étant prédéterminées, on associe à ces trois zones, trois configurations focales de faisceau respectives, et on élabore chaque séquence à partir des deux groupes d'éléments (G, G') sélectionnés en générant successivement les faisceaux suivants:
– $G_{1a}$, $G'_{3a}$, $G'_{2a}$, $G_{1b}$, $G'_{3b}$, $G'_{2b}$, $G_{3a}$, $G_{2a}$, $G'_{1a}$, $G_{3b}$, $G_{2b}$, $G'_{1b}$, la lettre G ou G' indiquant le groupe d'éléments sélectionnés, le premier indice indiquant le rang de la zone focale à partir dudit alignement et le second indice a ou b indiquant les faisceaux de sensiblement même orientation dans chaque groupe.

9. Procédé selon l'une des revendications 3 à 6, caractérisé en ce que le nombre N de zones focales étant égal à deux et les limites des zones adjacentes étant prédéterminées, on associe à ces deux zones deux configurations focales de faisceau respectives et on élabore chaque séquence à partir des deux groupes (G, G') d'éléments sélectionnés en générant les faisceaux suivants:
– $G_{2a}$, $G_{1a}$, $G'_{2a}$, $G'_{1a}$, $G_{2b}$, $G_{1b}$, $G'_{2b}$, $G'_{1b}$, la lettre G ou G' indiquant le groupe d'éléments sélectionnés, le premier indice indiquant le rang de la zone focale à partir dudit alignement, le second indice a ou b indiquant les faisceaux de sensiblement même orientation dans chaque groupe.

10. Procédé selon l'une des revendications précédentes, caractérisé en ce que, dans chaque groupe sélectionné, on génère un faisceau correspondant à une zone focale éloignée dudit alignement à partir d'un plus grand nombre d'éléments transducteurs que lorsqu'on génère un faisceau correspondant à une zone focale proche dudit alignement.

11. Procédé selon la revendication 10, caractérisé en ce que le nombre N de zones focales étant égal à quatre auxquelles on associe quatre configurations focales de faisceau respectives, chaque groupe sélectionné comporte seize éléments transducteurs et en ce qu'on utilise les seize éléments pour générer les faisceaux associés à la quatrième zone focale (la plus éloignée), douze éléments pour générer le faisceau associé à la troisième zone focale et huit éléments pour générer les faisceaux respectivement associés aux première et seconde zones focales.

12. Procédé selon l'une des revendications 3 à 11, caractérisé en ce que la valeur de l'angle faible précité est d'autant plus faible que la zone focale correspondante est éloignée dudit alignement.

**Patentansprüche**

1. Abbildungsverfahren mit Hilfe von Ultraschallsendeimpulsen und entsprechenden Empfangsechos, ausgehend von einer Reihe von Wandlerelementen, die an einen abzubildenden Gegenstand gekoppelt sind, wobei sendeseitig vorgegebene Sequenzen gebündelter Strahlen jeweils ausgehend von zwei Gruppen (G, G') von in zwei Abschnitten (A, B) der Reihe (11) ausgewählten Wandlerelementen erzeugt werden, wobei die Gruppen um mindestens ein Element (12) in jeder Sequenz unterschiedlich sind, so dass eine Abtastung solcher Strahlen erfolgt und jede Sequenz eine vorbestimmte Anzahl und vorbestimmte Abfolge von Strahlenaussendungen ausgehend von vorbestimmten Anzahlen von Elementen der beiden ausgewählten Gruppen aufweist, wobei die Strahlen gemäss N möglichen fokalen Konfigurationen gebildet sind, die N zu der Reihe parallelen Bereichen oder fokalen Zonen jeweils zugeordnet sind, wobei N eine gewählte ganze Zahl ist, dadurch gekennzeichnet, dass man die Strahlen abwechselnd von einer Gruppe zur anderen erzeugt, ausser wenn ein gegebener Strahl der am weitesten von der Reihe entfernten fokalen Zone (IV, für N = 4) entspricht, wobei in diesem Fall der nächste Ultraschallschuss ohne Gruppenwechsel (G, G') erfolgt.

2. Verfahren nach Anspruch 1, dadurch gekennzeichnet, dass jeder der am weitesten entfernten fokalen Zone (IV) entsprechenden Aussendung eine Aussendung in im wesentlichen derselben Richtung, aber mit einer der der am weitesten entfernten fokalen Zone benachbarten fokalen Zone (III) entsprechenden Konfiguration folgt.

3. Verfahren nach Anspruch 1 oder 2, dadurch gekennzeichnet, dass für jede gewählte Gruppe von Elementen in jeder Sequenz die Aussendung während dieser Sequenz im wesentlichen gemäss der einen oder anderen von zwei möglichen Richtungen erfolgt, die im wesentlichen symmetrisch bezüglich einer Normalrichtung zu der Reihe liegt und einen kleinen Winkel mit dieser einschliesst.

4. Verfahren nach einem der vorhergehenden Ansprüche, dadurch gekennzeichnet, dass in einer gegebenen Sequenz die Senderekurrenz der Strahlen variabel ist, wobei mindestens ein gegebener Strahl nach einer Zeit ausgesandt wird, die geringer als die Laufzeit eines Echos ist, das an der Grenze der am weitesten entfernten fokalen Zone gebildet wird und bis zu der Reihe (11) zurückkehrt.

5. Verfahren nach Anspruch 4, dadurch gekennzeichnet, dass man jeden Strahl am Ende der Rücklaufzeit eines Echos erzeugt, das an der Grenze der dem vorhergehenden Strahl entsprechenden fokalen Zone gebildet wurde, ausser wenn diese fokale Zone (I) der Wandlerreihe am nächsten liegt.

6. Verfahren nach Anspruch 5, dadurch gekennzeichnet, dass man den Aussendezeitpunkt für den Strahl, der der Aussendung eines der Wandlerreihe nächstliegenden fokalen Zone entsprechenden Strahls um eine zusätzliche Zeitspanne verzögert.

7. Verfahren nach einem der Ansprüche 3 bis 6, dadurch gekennzeichnet, dass, falls die Anzahl von fokalen Zonen gleich vier ist und die Grenzen benachbarter Zonen vorgegeben sind, diesen vier Zonen vier entsprechende fokale Strahlkonfigurationen zugeordnet werden und dass man jede Sequenz ausgehend von zwei gewählten Gruppen von Elementen (G, G') erarbeitet, indem man nacheinander die folgenden Strahlen erzeugt:

$$- G_{1a},\ G'_{4a},\ G'_{3a},\ G_{1b},\ G'_{4b},\ G'_{3b},\ G_{4a},\ G_{3a},\ G'_{1a},$$
$$G_{4b},\ G_{3b},\ G'_{1b},\ G_{2a},\ G'_{2a},\ G_{2b},\ G'_{2b},$$

wobei der Buchstabe G oder G' die Gruppe von ausgewählten Elementen angibt und der erste Index den Rang der fokalen Zone ausgehend von der Wandlerreihe bezeichnet, währen der zweite Index a oder b die Strahlen von im wesentlichen gleicher Orientierung in jeder Gruppe angibt.

8. Verfahren nach einem der Ansprüche 3 bis 6, dadurch gekennzeichnet, dass, wenn die Anzahl N von fokalen Zonen gleich drei ist und die Grenzen benachbarter Zonen vorgegeben sind, diesen drei Zonen drei fokale jeweilige Strahlenkonfigurationen zugeordnet werden und jede Sequenz ausgehend von zwei Gruppen (G, G') von ausgewählten Elementen erarbeitet wird, indem nacheinander die folgenden Strahlen erzeugt werden:

$$- G_{1a},\ G'_{3a},\ G'_{2a},\ G_{1b},\ G'_{3b},\ G'_{2b},\ G_{3a},\ G_{2a},\ G'_{1a},$$
$$G_{3b},\ G_{2b},\ G'_{1b},$$

wobei der Buchstabe G oder G' die Gruppe von ausgewählten Elementen angibt und der erste Index den Rang der fokalen Zone ausgehend von der Wandlerreihe bezeichnet, während der zweite Index a oder b die Strahlen von im wesentlichen gleicher Orientierung in jeder Gruppe bezeichnet.

9. Verfahren nach einem der Ansprüche 3 bis 6, dadurch gekennzeichnet, dass, wenn die Anzahl N von fokalen Zonen gleich zwei ist und die Grenzen benachbarter Zonen vorgegeben sind, diesen beiden Zonen zwei fokale jeweilige Strahlenkonfigurationen zugeordnet werden und jede Sequenz ausgehend von zwei Gruppen (G, G') von ausgewählten Elementen erarbeitet wird, indem die folgenden Strahlen erzeugt werden:

$$- G_{2a},\ G_{1a},\ G'_{2a},\ G'_{1a},\ G_{2b},\ G_{1b},\ G'_{2b},\ G'_{1b},$$

wobei der Buchstabe G oder G' die Gruppe von ausgewählten Elementen angibt und der erste Index den Rang der fokalen Zone ausgehend von der Wandlerreihe bezeichnet, während der zweite Index a oder b die Strahlen von im wesentlichen gleicher Orientierung in jeder Gruppe bezeichnet.

10. Verfahren nach einem der vorhergehenden Ansprüche, dadurch gekennzeichnet, dass in jeder ausgewählten Gruppe ein Strahl entsprechend einer bezüglich der Wandlerreihe entfernten fokalen Zone ausgehend von einer grösseren Zahl von Wandlerelementen erzeugt wird, als wenn ein Strahl entsprechend einer bezüglich der Wandlerreihe nahen fokalen Zone erzeugt würde.

11. Verfahren nach Anspruch 10, dadurch gekennzeichnet, dass, wenn die Anzahl N von fokalen Zonen gleich vier ist, denen vier jeweilige fokale Strahlkonfigurationen zugeordnet sind, jede ausgewählte Gruppe sechzehn Wandlerelemente aufweist, und dass die sechzehn Elemente zur Erzeugung der der vierten (am weitesten entfernten) fokalen Zone zugeordneten Strahlen verwendet werden, während zwölf Elemente zur Erzeugung des der dritten fokalen Zone zugeordneten Strahls und acht Elemente zur Erzeugung der der ersten bzw. zweiten fokalen Zone zugeordneten Strahlen verwendet werden.

12. Verfahren nach einem der Ansprüche 3 bis 11, dadurch gekennzeichnet, dass der Wert des genannten kleinen Winkels umso kleiner ist, je weiter die entsprechende fokale Zone von der Wandlerreihe entfernt ist.

**Claims**

1. An imaging method using sequences of ultrasound pulses and the reception of corresponding echos, by means of an alignment of transducer elements, coupled to an object to be imaged, of the type consisting for the emission in generating predetermined sequences of focalized beams from, every time, two groups (G, G') of selected transducer elements respectively in two sections (A, B) of said alignment (11), said groups differing at least by one element (12) from one sequence to the next one such that a sweeping of such beams is realized, and each sequence comprising a predetermined number and chain of beam emissions on the basis of predetermined numbers of elements of said two selected groups, said beams being made up according to N possible focal configurations associated respectively to N regions or focal zones which are parallel to said alignment, N being a selected integer, characterized in that the beams are produced alternately from one group to the other except if a given beam corresponds to the focal zone (IV for N = 4) remotest from the alignment, in which case the next following pulse is emitted without change of group (G, G′).

2. A method according to claim 1, characterized in that each emission corresponding to the remotest focal zone (IV) is followed by an emission of substantially the same direction but with a focal configuration corresponding to the focal zone (III) adjacent to the remotest focal zone.

3. A method according to claim 1 or 2, characterized in that for each selected group of elements, in each sequence, the emission takes place during said sequence substantially according to one or the other of two possible directions which are substantially symmetric with respect to a normal direction and includes a small angle with the latter.

4. A method according to one of the preceding claims, characterized in that in a given sequence, the emission convolution of the beams is variable, at least one given beam being emitted after a time lapse shorter than the propagation time of an echo created at the limit of the remotest focal zone and returning to said alignment 11.

5. A method according to claim 4, characterized in that each beam is generated at the expiration of the propagation time of an echo created at the limit of the focal zone corresponding to the preceding beam, except if this focal zone is the closest zone (I) to this alignment.

6. A method according to claim 5, characterized in that the beam emission instant following to the emission of the closest zone to this alignment is delayed by an additional time lapse.

7. A method according to one of claims C3 to 6, characterized in that, the number of focal zones being equal to four, and the limits of the adjacent zones being predetermind, four focal respective beam configurations are associated to these zones and each sequence is elaborated from two groups of selected elements (G, G′) by producing successively the following beams:

– $G_{1a}$, $G'_{4a}$, $G'_{3a}$, $G_{1b}$, $G'_{4b}$, $G'_{3b}$, $G_{4a}$, $G_{3a}$, $G'_{1a}$,

$G_{4b}$, $G_{3b}$, $G'_{1b}$, $G_{2a}$, $G'_{2a}$, $G_{2b}$, $G'_{2b}$,

the letter G or G′ indicating the group of selected elements, the first index defining the order of the focal zone beginning with said alignment and the second index a or b defining the beams of substantially the same direction in each group.

8. A method according to one of claims 3 to 6, characterized in that, the number N of focal zones being equal to three and the limits of adjacent zones being predetermined, three focal respective beam configurations are associated to the three zones and each sequence is elaborated from two groups of selected elements (G, G′) by generating successively the following beams:

– $G_{1a}$, $G'_{3a}$, $G'_{2a}$, $G_{1b}$, $G'_{3b}$, $G'_{2b}$, $G_{3a}$, $G_{2a}$, $G'_{1a}$,

$G_{3b}$, $G_{2b}$, $G'_{1b}$,

the letter G or G′ indicating the group of selected elements, the first index defining the order of the focal zone beginning with said alignment and the second index a or b defining the beams of substantially the same direction in each group.

9. A method according to one of claims 3 to 6, characterized in that, the number N of focal zones being equal to two and the limits of adjacent zones being predetermined, two focal respective beam configurations are associated to the two zones and each sequence is elaborated from two groups of selected elements (G, G′) by generating successively the following beams:

– $G_{2a}$, $G_{1a}$, $G'_{2a}$, $G'_{1a}$, $G_{2b}$, $G_{1b}$, $G'_{2b}$, $G'_{1b}$,

the letter G or G′ indicating the group of selected elements, the first index defining the order of the focal zone beginning with said alignment and the second index a or b defining the beams of substantially the same direction in each group.

10. A method according to one of the preceding claims, characterized in that in each selected group, a beam corresponding to a focal zone remote from said alignment is produced from a larger number of transducer elements as if a beam corresponding to a focal zone close to said alignment were produced.

11. A method according to claim C10, characterized in that the number N of focal zones being equal to four, to which four focal respective beam configurations are associated, each selected group comprises sixteen transducer elements, and that the sixteen elements are used for producing the beams associated to the fourth focal zone (the remotest zone), twelve elements are used for producing the beam associated to the third focal zone and eight elements are used for producing the beams which are respectively associated to the first and the second focal zone.

12. A method according to one of claims 3 to 11, characterized in that the value of said small angle is correspondingly the smaller as a focal zone is further remote from said alignment.

# FIG_1

# FIG_2-a

# FIG_2-b

FIG_3

FIG_4

FIG_5

FIG_6